# EUROPÄISCHE PATENTSCHRIFT

(11) **EP 1 509 381 B1**
(45) Veröffentlichungstag und Bekanntmachung des Hinweises auf die Patenterteilung: **07.12.2005**
(21) Anmeldenummer: 03730071.2
(22) Anmeldetag: 19.05.2003
(51) Int. Cl.: B29C 65/14

(54) **VERFAHREN UND VORRICHTUNG ZUM VERBINDEN VON FORMTEILEN MIT WENIGSTENS EINER KLEBSTOFFNAHT AUS EINEM DURCH WÄRMEBEAUFSCHLAGUNG AUSHÄRTBAREN KLEBSTOFF**
METHOD AND DEVICE FOR CONNECTING MOULDED PARTS BY MEANS OF AT LEAST ONE ADHESIVE SEAM CONSISTING OF AN ADHESIVE THAT CAN BE HARDENED BY HEAT
PROCEDE ET DISPOSITIF D'ASSEMBLAGE DE DEUX PIECES MOULEES PAR AU MOINS UN CORDON DE COLLE THERMODURCISSABLE

(30) Priorität: 25.05.2002 DE 10223341; 15.05.2003 DE 10322055
(43) Veröffentlichungstag der Anmeldung: 02.03.2005
(73) Patentinhaber: Sustech GmbH & Co. KG, 64287 Darmstadt (DE)
(72) Erfinder: SAUER, Hans-Martin, 64297 Darmstadt (DE); ELGIMIABI, Sohaib, 63303 Dreieich (DE); SPIEKERMANN, Stefan, 64285 Darmstadt (DE); HEMPELMANN, Rolf, 66386 St. Ingbert (DE); GRÖGER, Horst, 85551 Kirchheim (DE)
(74) Vertreter: Kann, Wolfgang
(86) Internationale Anmeldenummer: PCT/EP2003/005251
(87) Internationale Veröffentlichungsnummer: WO 2003/099542

(56) Entgegenhaltungen:
- EP-A- 1 155 798
- US-A- 5 317 045
- US-A1- 2001 010 251

## Beschreibung

Die Erfindung betrifft ein Verfahren zum Verbinden von Formteilen, von denen wenigstens eines aus nicht metallischem Material besteht, mit wenigstens einer Klebstoffnaht aus einem durch Wärmebeaufschlagung aushärtbaren Klebstoff, wobei die Formteile jeweils wenigstens bereichsweise in eine Metallform, von denen wenigstens eine entlang der Klebstoffnaht mit einer Nut versehen ist, eingelegt werden und die Klebstoffnaht aufgebracht wird, anschließend die Metallformen und die Formteile zusammengedrückt werden und die Klebstoffnaht erwärmt wird.

Die Erfindung betrifft darüber hinaus eine Vorrichtung zum Verbinden von Formteilen mit einer Klebstoffnaht aus einem durch Wärmebeaufschlagung aushärtbaren Klebstoff, wobei wenigstens ein Formteil aus nicht metallischem Material besteht, mit zwei Metallformen, in welche das jeweilige Formteil wenigstens bereichsweise einlegbar ist, wobei wenigstens eine Metallform entlang der Klebstoffnaht mit einer Nut versehen ist.

Es ist bekannt, beispielsweise im Automobil- oder Flugzeugbau, Bauteile zu schaffen, die aus wenigstens zwei Formteilen bestehen, welche miteinander verklebt werden. Um möglichst präzisionsgenaue Bauteile zu erhalten, werden dazu Metallpressformen verwandt, in deren Pressformteile die zu verbindenden Formteile eingelegt werden, wobei zuvor die zu verbindenden Formteile mit einer Klebstoffnaht versehen werden, die so angeordnet ist, dass sie innerhalb der Metallpressform parallel zu in der Regel beidseits der Formteile in den Pressformteilen ausgebildeten Nuten, vorzugsweise Fräsnuten, angeordnet ist. Dabei werden Klebstoffnähte eingesetzt, die aus einem durch Wärmebeaufschlagung aushärtbaren Klebstoff, beispielsweise Polyurethankleber, bestehen. Nach dem Einlegen der Formteile in die Pressform wird die Pressform geschlossen, die Teile werden zusammengepresst und die Klebstoffnaht wird erwärmt, damit der Klebstoff aushärten bzw. auspolymerisieren kann, Die notwendige Wärme kann beispielsweise durch die Nuten durch heiße Fluide, z.B. heiße Luft, eingebracht werden. In erster Linie dienen diese Nuten jedoch zur Zu- und Abfuhr von Kühlmitteln, Luft, Wasser, Hydraulikölen und Abgasen. Das Einbringen erhitzter Fluide ist aufwendig und die dadurch erzielbare Erwärmung der Klebstoffschicht erfolgt sehr langsam, da die Wärme durch die zu fügenden Formteile hindurch in die Klebenaht gebracht werden muss, d.h. die Wärmeenergie gelangt ausschließlich durch Wärmeleitung an den Bestimmungsort. Da jedoch Kunststoffteile mit niedriger Wärmeleitfähigkeit die heute noch üblichen Metallbleche mit hoher Wärmeleitfähigkeit zunehmend ersetzen, muss für die Ausführung einer solchen Klebung entsprechend viel Zeit aufgewendet werden, was zu entsprechend langen Taktzeiten im Automobilbau führt. Von weiterem Nachteil bei dieser Art der Erwärmung ist, dass für die Metallpressform sehr massive Aluminiumgussteile erforderlich sind, um trotz der zyklischen Erwärmung und Abkühlung der Klebeanlage die geforderten engen Maßtoleranzen der Formteile einzuhalten. Außerdem ist eine Umrüstung einer solchen Anlage für einen Modellwechsel teuer und zeitaufwendig oder ggf. auch gar nicht möglich. Grundsätzlich ist es bekannt, zur Erwärmung von beispielsweise Polymeren, Mikrowellen einzusetzen (z.B. WO 01/30118 A1 oder WO 01/28771 A1). Auch zur Erwärmung von Klebstoffen werden Mikrowellen eingesetzt (DE 100 40 325 A1), ggf. sind die Klebstoffe dabei mit ferromagnetischen (DE 100 37 883 A1) oder magnetischen Nano-Partikeh (DE 199 54 960 A1) versehen. Dabei kann je nach Beschaffenheit der Klebstoffe zusätzlich auch die Beaufschlagung durch ein magnetisches Gleichfeld vorgesehen sein. Diese bekannten Mikrowellenverklebungsverfahren sind jedoch bei gattungsgemäßen Verfahren zum Verbinden von Formteilen zwischen Metallformen nicht geeignet.

EP-A-1,155,798 zeigt einverfahren nach dem Oberbegriff des Anspruches 1.

Aufgabe der Erfindung ist es deshalb, eine Lösung zu schaffen, mit der die notwendige Wärmebeaufschlagung der Klebstoffnaht zwischen zwei zwischen zwei Metallformen angeordneten Formteilen innerhalb kürzester Zeit durchgeführt werden kann, um den Verfahrensablauf zu beschleunigen.

Diese Aufgabe wird mit einem Verfahren der eingangs bezeichneten Art erfindungsgemäß dadurch gelöst, dass in die Nut der einen Metallform eine Mikrowellenleitung eingelegt wird und nach dem Zusammendrücken der Metallformen und der Formteile über die Mikrowellenleitung Mikrowellen in die Nut zur Erwärmung der Mikrowellen absorbierenden Klebstoffnaht eingeleitet werden.

Mit diesem Verfahren ist es möglich, in sehr kurzer Zeit die Klebstoffnaht zwischen Formteilen, die während der Verklebung vollständig oder zum großen Teil durch zwei Metallformen, beispielsweise zwei Pressformteilen einer Metallpressform, eingeschlossen sind, zu erwärmen, um die Aushärtung des Klebstoffes in kurzer Zeit zu ermöglichen, so dass die Taktzeiten deutlich verringert werden. Dies wird dadurch ermöglicht, dass die Mikrowellenleitung in die Nut der einen Metallform integriert wird, so dass also die Mikrowellen ungehindert durch die äußere Abschirmung durch die Metallformen quasi von innen an die Klebstoffnaht abstrahlen können. Da weder die Formteile selbst noch die Metallformen erwärmt werden müssen, können die Metallformen gegenüber aus massiven Aluminiumgussteilen bestehenden Pressformteilen von Metallpressformen in wesentlich leichterer Bauweise konstruiert sein. Es treten keine oder nur noch geringe mechanische Verformungen bei der Klebstoffaushärtung auf. Dadurch bietet das Verfahren die Möglichkeit, Metallpressformen in einfacherer Bauweise zu verwenden oder auf solche ganz zu verzichten und zwei voneinander getrennte, mit Hilfe von Handhabungsgeräten oder dgl. zusammenführbare Metallformen zu verwenden.

Nach einer ersten bevorzugten Gestaltung ist vorgesehen, dass als Mikrowellenleitung ein Hohlleiter verwendet wird. Da die Nut in der wenigstens einen Metallform gegenüber herkömmlichen Metallpressformen größer dimensioniert werden kann, steht mehr Raum für die Mikrowellenzuleitungen zur Verfügung, so dass auch gängige Hohlleiter als Mikrowellenleitung eingesetzt werden können.

Diese vorgenannte Ausgestaltung ist insbesondere dann zweckmäßig, wenn in ganz bevorzugter Ausgestaltung vorgesehen ist, dass die Formteile von der jeweiligen an einem Handhabungsgerät angeordneten Metallform gegriffen, wenigstens ein Formteil an einer Klebstoffabgabe entlanggeführt und anschließend die beiden Metallformen mit den Formteilen zusammengedrückt werden. Das Verfahren läßt sich dann ohne eine Metallpressform durchführen, es können vielmehr zwei Metallformen verwendet werden, die nach Art einer Formvorlage ausgebildet sind, bei denen in einem Block aus beispielsweise Leichtbaumaterial (Aluminiumwabenstrukturen, Aluminiumschaum und Kunststoff-Hartschaum) die eine Oberseite so gestaltet ist, dass sie eines der beiden Formteile auf der der Klebenaht gegenüberliegenden Seite formschlüssig aufnehmen können. Dabei werden entlang der späteren Klebstoffnaht zusätzliche Kanäle ausgefräst, welche die Mikrowellenleitung (Hohlleiter oder Koaxialleiter) aufnehmen können. Beim Verkleben der Formteile können dann beispielsweise herkömmliche Industrieroboter eingesetzt werden, die an ihren Armen die beiden Metallformen tragen und mit diesen Werkzeugen die beiden zu fügenden Formteile aufnehmen. Eines der beiden Formteile, z.B. die Innenschale einer Kraftfahrzeugtür, wird entlang der späteren Klebenaht an einer stationär montierten Dosierdüse eines Klebstoffspenders entlanggeführt. Die Dosierdüse spritzt beispielsweise eine Klebstoffraupe auf die spätere Klebenaht. Anschließend setzen die Roboter mit den beiden Metallformen die beiden Formteile (z.B. Innenschale und Außenschale der Tür) zusammen und die Mikrowellenenergiequelle wird eingeschaltet. Darauf beginnt sich der Klebstoff zu erwärmen und härtet aus. Nach Ablauf der Aushärtezeit wird das Mikrowellengerät abgeschaltet. Ein Roboterarm bzw. die daran befestigte Metallform, koppelt sich von den verbundenen Formteilen ab. Der andere Roboterarm legt dann das fertige Teil ab. Ein nächster Klebezyklus kann beginnen. Sollen abwechselnd verschiedene Formteile verklebt werden, dann kann der jeweilige Roboter die Metaltformen ablegen und anders gestaltete Metallformen aufnehmen. Dieser einfache Verfahrensablauf ist ersichtlich bei Metallpressformen nicht möglich.

Alternativ kann auch vorgesehen sein, dass als Mikrowellenleitung ein Koaxialleiter verwendet wird, der von einem draht- oder rohrförmigen isolierten Innenleiter, der in die Nut eingelegt wird, und dem Nutrandbereich der Metallform gebildet wird. Diese Ausgestaltung ist insbesondere, aber nicht ausschließlich geeignet zur Durchführung des Verfahrens in einer Metallpressform. Dabei dient der Nutrandbereich als Außenleitung der Mikrowellenleitung, indem in die Nut selbst ein isolierter Draht oder rohrförmiger Innenleiter eingelegt wird, der, wie der Nutrandbereich, mit der Mikrowellenenergiequelle verbunden wird. Metallpressformen zum Fixieren von Kunststoff- oder Metallblechteilen sind in der Regel aus Aluminiumdruckguss gefertigt und besitzen entlang der gesamten Klebenaht eine gefräste Nut, die wenige cm tief und breit ist (z.B. 3 cm tief und 2 cm breit). In diese Nut wird ein isolierter Metalldraht oder ein isoliertes Metallrohr eingelegt, das nach dem Prinzip eines Koaxialleiters Mikrowellen durch die Fräsnut führen kann. Diese Verfahrensgestaltung kann immer dann angewendet werden, wenn wenigstens einer der beiden zu fügenden Formteile nicht aus Metallblech besteht. Der zweite Teil des Koaxialleiters, nämlich der Außenleiter, wird vom Nutrandbereich gebildet. Die Nut selber ist durch den Innenleiter nicht völlig ausgefüllt, so dass sie zusätzlich zur Zufuhr von Fluiden geeignet ist, beispielsweise zur Zu- und Abfuhr von Kühlmitteln oder dgl.

Wenn ein Formteil Metall enthält, kann es zusätzlich als Außenleiter des Koaxialleiters verwendet werden, wobei dieses Formteil dann gegenüber dem anderen aus nicht metallischem Material bestehenden Formteil (vorzugsweise aus Kunststoff) auf der den Innenleiter aufnehmenden Nut abgewandten Seite zwischen den Metallformen angeordnet wird. Das Verfahren ist also auch dann geeignet, wenn nicht beide zu fügenden Formteile aus nicht metallischem Material bestehen.

Voraussetzung ist allerdings, dass wenigstens ein Formteil aus einem nicht metallischen Material besteht

Da die Nut nicht, völlig mit dem Innenleiter ausgefüllt ist, ist in bevorzugter Ausgestaltung vorgesehen, dass durch den rohrförmigen Innenleiter, d.h. wenn dieser rohrförmig gestaltet ist, und/oder die Nut ein Fluid eingeleitet wird, beispielsweise zu Kühlzwecken. Ein eingeleitetes Gas kann gleichzeitig als Isolationsmedlum dienen. An Endstellen, an welchen Gas bzw. Flüssigkeiten in die Nut eingeleitet werden, müssen zusätzliche Isolationsmaßnahmen vorgesehen werden, die verhindem, dass Mikrowellenenergie nach außen austreten kann.

Wenn sehr lange Fräsnuten oder sehr große Mikrowellenleistungen eingesetzt werden sollen, ist bevorzugt vorgesehen, dass über der Länge der Nut mehrere Mikrowellenleiterabschnitte eingelegt werden, die getrennt mit Mikrowellenenergie versorgt werden.

Das Verfahren kann auch dann verwendet werden, wenn, wie beispielsweise in DE 100 37 883 A1 beschrieben, resonanzoptimierte Ferrite oder, wie in DE 199 54 960 A1 beschrieben, mikro- und nanoskalige Ferritpulver als Mikrowellenabsorber in den Klebstoff oder die Fügeteile eingearbeitet sind. In diesem Fall ist bevorzugt vorgesehen, dass zusätzlich an die Klebstoffnaht während des Pressvorganges ein Gleichstromfeld angelegt wird. Hierzu können bevorzugt in die nicht den Innenleiter aufnehmende Nut Permanentmagneten eingelegt werden, deren Magnetfeld durch das der Mikrowellenleitung abgewandte Formteil (z.B. ein Blech von 0,25 bis 2 mm Stärke) in den mit Nano-Ferriten gemischten Klebstoff eindringt. Während die magnetischen Feldlinien des Permanentmagneten in Bezug auf den Mikrowelleninnenleiter der Koaxialstruktur in vorwiegend radiale Richtung weisen, umschließen die magnetischen Feldlinien des Mikrowellenfeldes den Innenleiter und verlaufen somit zirkular, d.h. senkrecht zum Gleichstromfeld. Dies entspricht genau den in DE 100 37 883 A1 spezifizierten Anforderungen an die Mikrowellenpolarisation, wonach der Winkel zwischen beiden Feldern, vorzugsweise zwischen 45° und 145° liegen sollen.

In bevorzugter Ausgestaltung ist vorgesehen, dass die Mikrowellen absorbierende Klebstoffnaht mikrowellenabsorbierende Füllstoffe, insbesondere Ruß, Ferrite, Metallpartikel, Metallgitter und/oder dielektrisch absorbierende Salze, vorzugsweise Bariumtitanat, enthält. Wenn Ferrite als Füllstoffe verwendet werden, liegt deren Gewichtsanteil am Klebstoff bevorzugt zwischen 0,2 und 5 Gew.%, insbesondere zwischen 0,5 und 3,0 Gew.%. Als Ferrite kommen bevorzugt folgende in Betracht:
Me^{a}₁₋ₓMe^{b}ₓFe₂O₄ oder Li₁₋ₓZn₂ₓFe₅₋ₓO₈, wobei
Me^{a}=Mn, Co, Ni, Mg, Ca, Cu, Zn, Y, V und/oder Co ist;
Me^{b}=Zn und/oder Cd ist, und
X=0-1, insbesondere 0,05-0,95 ist.

M^{a} und M^{b} stehen für eine zweiwertige Metallkomponente, wobei jeweils nur eines der aufgezählten Metallionen oder aber mehrere der aufgezählten Metallionen zugegen sein können. Die Stöchiometrie der einzelnen Metall sind so gewählt, dass die Ferrite elektrisch neutral sind. Bevorzugt werden superparamagnetische, nanoskalige Teilchen eines Ferrits mit einem volumengemittelten Teilchendurchmesser im Bereich von 2 bis 100 nm eingesetzt.

Nach einer besonders bevorzugten Ausführungsform werden Ferrite der allgemeinen Formel M^{a} ₁₋ₓM^{b} ₓFe₂O₄ oder Li₁₋ₓZn₂ₓFe₅₋ₓO₈ ausgewählt, wobei X insbesondere für M^{a}₁₋ₓM^{b} ₓFe₂O₄ mindestens 0,2 ist. Besonders bevorzugt sind ferner Ferrite der allgemeinen Formel M^{a} ₁₋ₓZnₓFe₂O₄ mit X = 0-1, insbesondere mindestens 0,2 und bevorzugt 0,2 bis 0,8, insbesondere 0,3 bis 0,5.

Nach einer weiteren besonders bevorzugten Ausführungsform werden Ferrite der allgemeinen Formel Mn₁₋ₓM^{b} ₓFe₂O₄, eingesetzt, wobei M^{b} ausgewählt ist unter Zn und Cd, insbesondere Zn, und X = 0,2-0,5, insbesondere 0,3-0,4, ist.

Nach einer weiteren besonders bevorzugten Ausführungsform werden Ferrite der allgemeinen Formel Co₁₋ₓM^{b} ₓFe₂O₄ verwendet, wobei M^{b} ausgewählt ist unter Zn und Cd, insbesondere Zn, und X = 0,2-0,8, insbesondere 0,4-0,6, ist

Nach einer weiteren besonders bevorzugten Ausführungsform werden Ferrite der allgemeinen Formel Ni₁₋ₓM^{b} ₓFe₂O₄ eingesetzt, wobei M^{b} ausgewählt ist unter Zn und Cd, insbesondere Zn, und X = 0,3-0,8, insbesondere 0,5-0,6, ist.

Besonders bevorzugt sind ferner Ausführungsformen, die Lithiumzinkferrite der allgemeinen Formel Li₁₋ₓZn₂ₓFe₅₋ₓO₈ mit X = 0-1, insbesondere mindestens 0,1 enthalten.

Nach einer weiteren besonders bevorzugten Ausführungsform ist LiFe₅O₈ enthalten.

"Nanoskatige Teilchen" im Sinne der vorliegenden Anmeldung sind bevorzugt Teilchen mit einem volumengemittelten Teilchendurchmesser von ≤ 100 nm. Ein bevorzugter Teilchengrößenbereich beträgt 3 bis 50 nm, insbesondere 4 bis 30 nm und besonders bevorzugt 5 bis 15 nm. Derartige Teilchen zeichnen sich durch eine hohe Uniformiertheit bezüglich ihrer Größe, Größenverteilung und Morphologie aus. Die Teilchengröße wird dabei bevorzugt nach der UPA-Methode (Ultrafine Particle Analyzer) bestimmt, z. B. nach dem Laser-Streulicht-Verfahren (laserlight back scattering). Die eingesetzten nanoskaligen Ferrit-Teilchen sind zudem superparamagnetisch.

Die weiter oben angegebene Aufgabenstellung wird auch mit einer gattungsgemäßen Vorrichtung dadurch gelöst, dass in der. Nut der einen Metallform eine Mikrowellenleitung angeordnet ist, welche mit einer Mikrowellenenergiequelle verbunden ist.

Nach einer ersten bevorzugten Ausgestaltung ist dabei vorgesehen, dass die Mikrowellenleitung als Hohlleiter ausgebildet ist. Diese Variante ist bevorzugt dann vorgesehen, wenn die Metallformen nicht Bestandteil einer Metallpressform sind, was grundsätzlich aber auch möglich ist, sondern wenn die Metallformen als eine Art Formvorlage ausgebildet sind, welche z.B. aus einem Block aus Leichtbaumaterial (Aluminiumwagenstrukturen, Aluminiumschaum, Kunststoff-Hartschaum) bestehen, dessen Oberseite so gestaltet ist, dass sie eine der beiden zu fügenden Formteile auf der der Klebefuge gegenüberliegenden Seite formschlüssig aufnehmen können. Dabei ist in einer Metallform eine entsprechend dimensionierte Nut ausgespart, in die die Mikrowellenleitung eingesetzt ist.

Ganz besonders bevorzugt ist dabei vorgesehen, dass die Metallformen jeweils an einem Handhabungsgerät angeordnet sind. Dazu weisen die Metallformen rückseitig beispielsweise eine Kupplung auf, mit der sie an einem Roboterarm angekuppelt werden können. In den Metallformen können zusätzlich Kanäle und Bohrungen für die Aufnahme eines Permanent- oder Elektromagneten eingefräst sein, welche ein statisches Magnetfeld in der Klebenaht erzeugen. Ferner können Bohrungen für die Aufnahme zusätzlicher Halteelemente, z.B. Saugnäpfe oder mechanische Greifzangen, angebracht sein, die das jeweilige Formteil in der Formvorlage (Metallform) fixieren. Die Oberfläche der Metallformen sowie die Innenseiten der eingefrästen Kanäle werden vorzugsweise mikrowellendicht mit Metallblech oder -folie überzogen und mit Zuleitungen für die Mikrowellenenergie ausgestattet. Für das zweite zu fügende Formteil wird grundsätzlich eine entsprechend gestaltete Metallform bzw. Formvorlage verwendet, wobei jedoch auf die Mikrowellenbestandteile verzichtet werden kann.

Anstelle einer als Hohlleiter ausgebildeten Mikrowellenleitung kann alternativ auch vorgesehen sein, dass die Mikrowellenleitung als Koaxialleitung ausgebildet ist, welche von einem draht- oder rohrförmigen isolierten Innenleiter innerhalb der Nut und dem Nutrandbereich gebildet ist, welcher als Außenleiter mit der Mikrowellenenergiequelle verbunden ist. Ein solcher Koaxialleiter eignet sich auch bei vorbeschriebenen Metallformen. Besonders geeignet ist er aber beim Einsatz in einer Metallpressform herkömmlicher Bauart, in den Hohlleiter nicht eingesetzt werden können, da Hohlleiter einen Mindestquerschnüt aufweisen, der praktisch nicht zu unterscheiden und in jede Richtung etwa gleich der halben Wellenlänge der Mikrowellenstrahlung ist. Bei Verwendung von z.B. 2,45-ghz-Strahlung, entsprechend einer Wellenlänge von 12,2 cm, muss der Hohlleiter somit einen Querschnitt von 6 x 6 cm² besitzen. Das theoretisch günstigste Innenmaß liegt bei 7 x 3 cm² Querschnittsfläche. In der Praxis stehen jedoch oft nur Querschnitte von 2 x 3 cm² zur Verfügung, so dass die Hohlleitertechnik in solchen Bereichen nicht anwendbar ist. Dies ist jedoch mit der vorbeschriebenen Koaxialleiterausbildung möglich. Diese Art der Vorrichtung kann einfach in bestehende Anlagen integriert oder auch nachgerüstet werden. Eine Neuanfertigung der Pressform ist in der Regel nicht notwendig.

Dabei kann zusätzlich die Mikrowellenenergiequelle mit einem Metall enthaltenden Formteil verbunden sein, welches auf der den Innenleiter aufnehmenden Nut abgewandten Seite zwischen den Metallformen angeordnet ist und gemeinsam mit dem Innenleiter den Mikrowellenkoaxialleiter bildet.

Die Verbindung zwischen der Mikrowellenenergiequelle und dem Koaxialleiter innerhalb der Pressform erfolgt über wenigstens einen im Bereich der den Innenleiter aufnehmenden Nut angeordneten Anschlussflansch. Über diesen Anschlussflansch kann die Mikrowellenenergie mittels eines konventionellen HF-Kabels in die Nut eingespeist werden. Die Mikrowellenenergie selbst stammt z.B. von einem Magnetron in handelsüblicher Bauart, der außenseitig an der Pressform angeordnet ist, weitere Anschlussflansche können für die Abgleichmaßnahmen an der Vorrichtung angebracht sein.

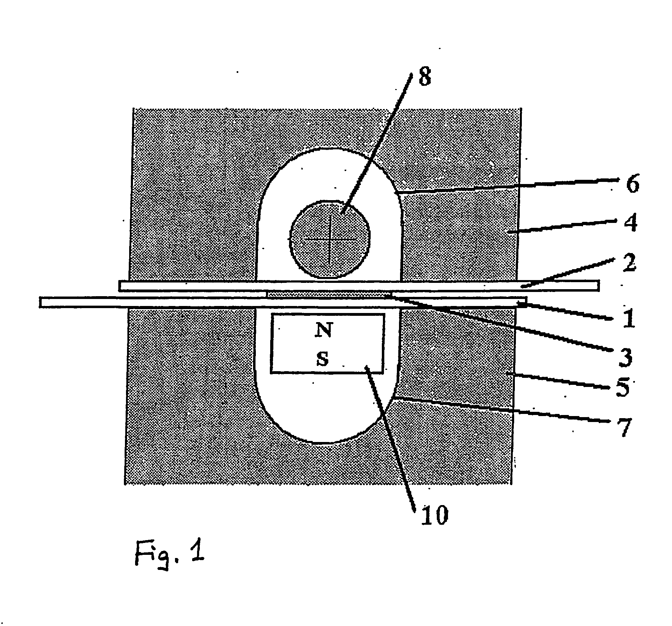

Die Efindung ist nachstehend anhand der Zeichnung beispielhaft näher erläutert. Diese zeigt jeweils in stark vereinfachter schematischer Darstellung in
- Fig. 1: einen Querschnitt durch eine erste Ausführungsform einer erfindungsgemäßen Vorrichtung,

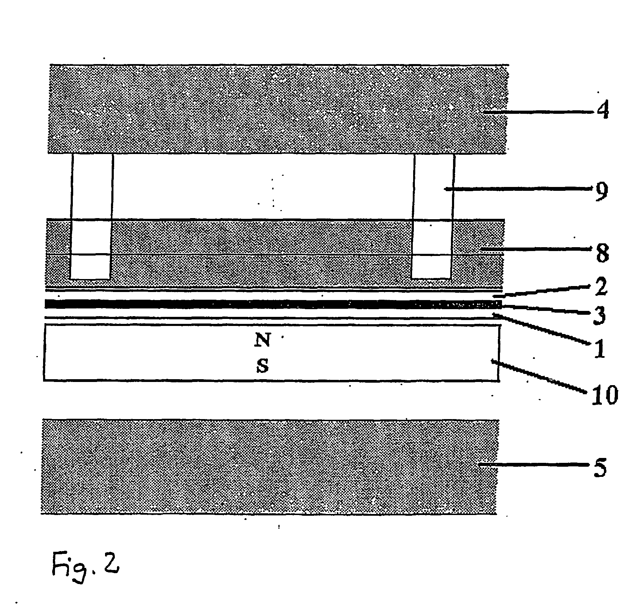

- Fig. 2: einen Längsschnitt durch die Vorrichtung nach Fig. 1,
- Fig. 3: eine perspektivische Darstellung einer zweiten Ausführungsform und in
- Fig. 4: eine perspektivische Darstellung einer dritten Ausführungsform.

Eine erste Ausgestaltung einer erfindungsgemäßen Vorrichtung zum Verbinden von Formteilen 1, 2 mit einer Klebstoffnaht 3 ist als Metallpressform ausgebildet, die aus zwei Metallformen zur Aufnahme jeweils eines Formteiles 1 bzw. 2 besteht, nämlich ein oberes Pressteil 4 und ein unteres Pressteil 5 aufweist. Beide Teile 4, 5 sind beispielsweise im Aluminium-Druckguss gefertigt Wenigstens das Oberteil 4, vorzugsweise aber auch das Unterteil 5, sind entlang der gesamten Klebstoffnaht 3 parallel zu dieser jeweils mit einer vorzugsweise gefrästen Nut 6, 7 versehen, die wenige cm tief und breit ist (z.B. üblicherweise 3 cm tief und 2 cm breit). Entlang der gesamten Nut 6 ist in die Nut 6 ein isolierter Metalldraht 8 oder ein isoliertes Metallrohr eingelegt, welches beispielsweise mittels Halteklammern 9 in der Nut in fixierter Lage gehalten ist, und zwar vorzugsweise so, dass der Metallleiter 8 mit Abstand zu den Nutwandungen angeordnet ist und sich in Kontakt zum benachbarten Formteil 2 befindet.

Der isolierte Metalldraht 8 bildet den Innenleiter eines Koaxialleiters, dessen Außenleiter vom Nutrandbereich der Aluminiumpressform gebildet ist. Der so gebildete, als Mikrowellenleitung dienende Koaxialleiter ist über wenigstens einen nicht dargestellten Anschlussflansch beispielsweise mittels eines konventionellen HF-Kabels an eine nicht dargestellte Mikrowellenenergiequelle, beispielsweise ein Magnetron handelsüblicher Bauart angeschlossen. In der anderen Nut 7 kann ein Permanentmagnet 10 angeordnet sein.

Wenn die mit einer Klebstoffnaht 3 verbundenen, zu fügenden Formteile 1, 2 in die Metallpressform eingelegt worden sind, und die beiden Pressformteile 4 und 5 geschlossen worden sind, wird über den elektrisch isolierten Innenleiter 8 ein Mikrowellenstrom eingespeist, der über diesen Leiter 8 an der gesamten Klebenaht 3 entlanggeführt wird. Die magnetischen Feldlinien, die zeichnerisch nicht dargestellt sind und die den Innenleiter 8 umschließen, durchdringen die beiden dargestellten Formteile 1, 2 aus Kunststoff und die dazwischen befindliche mikrowellenabsorbierende Kiebstoffnaht 3, die sich durch die Strahlung erwärmt und abbindet. Als Mikrowellenquelle eignen sich konventionelle Magnetron-Sender mit einer Frequenz von 2,45 GHz und einer Leistung zwischen 800 W und mehreren KW. Die Aluminiumpressform 4, 5 bewirkt zugleich die Abschirmung der Mikrowellenstrahlung gegenüber dem Außenraum der Vorrichtung.

Derart hochfrequente magnetische Felder vermögen (im Gegensatz zu HF-Magnetfeldem aus Induküonsanlagen, deren Frequenz nur wenige MHz beträgt) nicht in die Aluminiumpressform einzudringen, sondern verlaufen stets im Mikrowellenkanal, d.h. an der inneren Oberfläche der Nut 6 entlang. Infolgedessen wird die Pressform durch die Mikrowellenstrahlung nicht erwärmt.

Der Bedarf an Mikrowellenleistungen liegt bei Annahme einer in 30 sek. zu erzielenden Erwärmung der Klebstoffnaht 3 von 20°C auf 120°C bei etwa 1 KW/m Länge der Klebstoffnaht 3.

Als Klebstoffe für die Klebstoffnaht 3 werden üblicherweise Polyurethan-Kleber (1- oder 2-komponentig) eingesetzt, die vorzugsweise mit 3 bis 5 Gew.% einer Dispersion von Nanoferriten, z.B. nanoskaligem Nickel-Zink-Ferrit, vermischt sind. Durch diese ferritischen Zusätze wird die Energieabsorption aus dem hochfrequenten Magnetfeld drastisch erhöht.

Folgende Parameter haben sich für die Durchführung des erfindungsgemäßen Verfahrens als besonders günstig herausgestellt:
Arbeitsfrequenz der Mikrowellenenergiequelle: 1 MHz bis 300 GHz, bevorzugt 500 MHz bis 25 GHz, insbesondere 900 MHz bis 6 GHz und ISM-Frequenzen 915 MHz, 2,45 GHz, 5,8 GHz jeweils +/- 5 %.
Leistung pro Meter Länge des Koaxialleiters: 10 W/m bis 50 KW/m bevorzugt 100 W/m bis 5 KW/m.
Leiterquerschnitt außen: 5 mm bis 25 cm, Innenleiter 0,5 mm bis 12 cm; bevorzugt außen 7 cm bis 9 cm, Innenleiter 2 cm bis 4 cm.
Optionales Gleichstrommagnetfeld: 0 mT bis 10 T, bevorzugt 0 mT bis 250 mT.
Ferritzusätze zum Klebstoff: Magnetische Partikel definierter Größe bzw. Teilchengrößenverteilung sowohl Metalloxide als auch reine Metalle und Metalllegierungen; bevorzugt Ferrite, insbesondere solche aus Eisen-, Kobalt-,
Nickel-, Mangan-, Kupfer-, Magnesium-, Calcium-, Lithium-Oxiden, Ytrium-Eisen-Granulate (YIG), auch solche mit Zusätzen an Ca, Al, In, V.
Teilchengröße des Ferrites: 2 nm bis 100µm, bevorzugt 5 nm bis 100 nm.
Sättigungsmagnetisierung des magnetischen Nanopulvers: M = 20 mT - 2,5 T, bevorzugt: 100 - 500 mT.

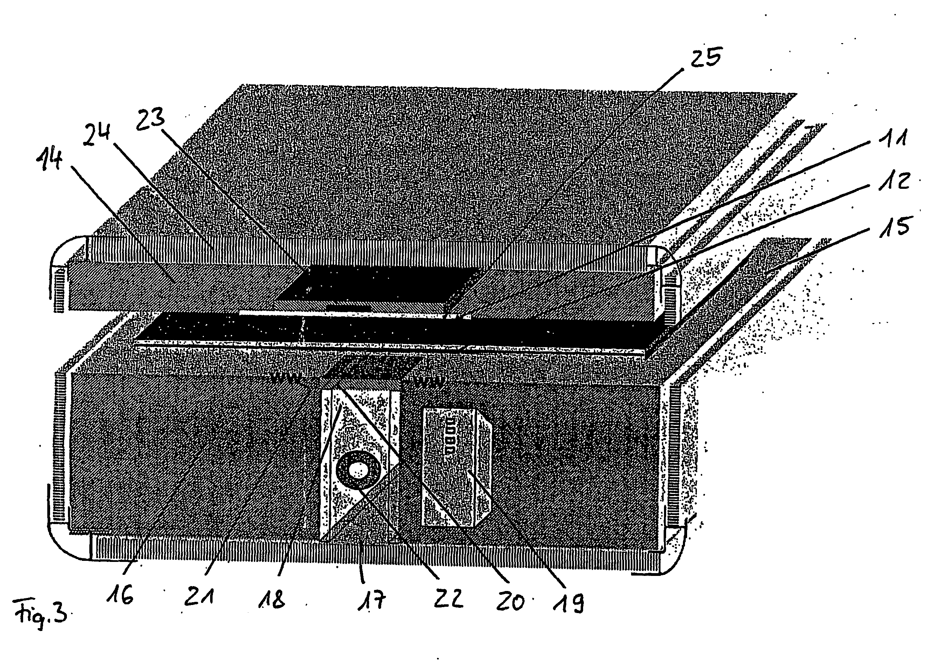

Fig. 3 zeigt eine andere Ausführungsform einer erfindungsgemäßen Vorrichtung, die nicht in Form einer Metallpressform ausgebildet ist, sondern zwei Metallformen 14, 15 zur Aufnahme von mit einer nicht dargestellten Klebstoffnaht zu verbindenden Formteilen 11, 12 aufweist, die über nicht dargestellte Kupplungen oder dgl. an ein Handhabungsgerät, beispielsweise einen Handhabungsarm eines Roboters angekuppelt werden können und unabhängig voneinander bewegt werden können, insbesondere auch zusammengedrückt werden können, um die Formteile 11, 12 miteinander zu verbinden.

Die im Sinne der Fig. 3 untere Metallform 15 weist einen Block aus Leichtbaumaterial 16 auf, der beispielsweise aus einer Aluminiumwabenstruktur aus Aluminiumschaum oder einem Kunststoff-Hartschaum besteht. Die Oberseite ist so gestaltet, dass sie eines der beiden Formteile, nämlich das Formteil 12 formschlüssig aufnehmen kann, entlang der zu erzeugenden Klebenaht ist eine Nut 17 ausgespart, die beim Ausführungsbeispiel einen Mikrowellenhohlleiter 18 als Mikrowellenleitung aufnimmt. Anstelle des Mikrowellenhohlleiters 18 kann auch ein Koaxialleiter verwendet werden. In den Block 16 ist eine Mikrowellenenergiequelle 19, beispielsweise ein Magnetron, integriert, die Nut 17 ist zum Formteil 12 hin, beispielsweise mit einer Kunststoffabdeckung 20, abgedeckt. Ferner ist ein Mikrowellenabweiserprofil 21 und ein Kurzschlussschieber 22 vorgesehen.

Die obere Metallform 14 kann grundsätzlich in gleicher Weise gestaltet sein mit dem Unterschied, dass keine Mikrowellenteltung vorgesehen ist. Im dargestellten Ausführungsbeispiel ist die Gestaltung etwas anders. Die obere Metallform 14 nimmt in einer Nut einen Permanentmagneten 23 auf, der sich oberhalb der zu bildenden Klebstoffnaht befindet. Ferner weist die Metallform 14 oberseitig einen äußeren Aluminiumwabenkem 24 auf. Zu den Formteilen 11, 12 hin ist ein Reflektor 25 angeordnet.

Der Arbeitsablauf bei einem Verkleben von z.B. Automobüteilen, z.B. einer Innen- und Außenschale einer Fahrzeugtür, mit dieser Vorrichtung ist wie folgt: zwei Industrieroboter, die an ihren Armen die Metallformen 14 bzw. 15 tragen, nehmen mit diesen Werkzeugen die Innen- und die Außenschale der Tür auf. Eines der beiden Teile, z.B. die Innenschale, wird entlang der späteren Klebenaht an einer stationär montierten Dosierdüse eines Klebstoffspenders entlanggeführt. Die Dosierdüse spritzt eine Klebstoffraupe (d.h. z.B. ein Band aus einem thixotropen, mit Mikrowellen absorbierenden Additiven, wie Nano-Ferriten gemischten Polymerisationsklebstoff) für die spätere Klebenaht auf das betreffende Formteil 11 bzw. 12. Anschließend setzen die Roboter die innen- und die Außenschale der Tür durch entsprechendes Zusammenfügen der Metallform 14 und 15 zusammen und die Mikrowellenenergiequelle 19 wird aktiviert. Daraufhin beginnt sich der Klebstoff zu erwärmen und härtet aus. Nach Ablauf der Aushärtezeit wird die Mikrowellenenergiequelle 19 abgeschaltet. Einer der Roboter bzw. die daran befestigte Metallform 14 bzw. 15 kuppelt sich von der Tür ab, der andere Roboter legt dann die fertige Tür ab, die Vorrichtung ist nun wieder für den nächsten Klebezyklus bereit.

An beiden Metallformen 14, 15 können nicht dargestellte Bohrungen für die Aufnahme zusätzlicher Haltevorrichtungen, z.B. Saugnäpfe oder mechanische Greifzangen angebracht sein, die das jeweilige Formteil 11, 12 in der jeweiligen Metallform 14, 15 fixieren.

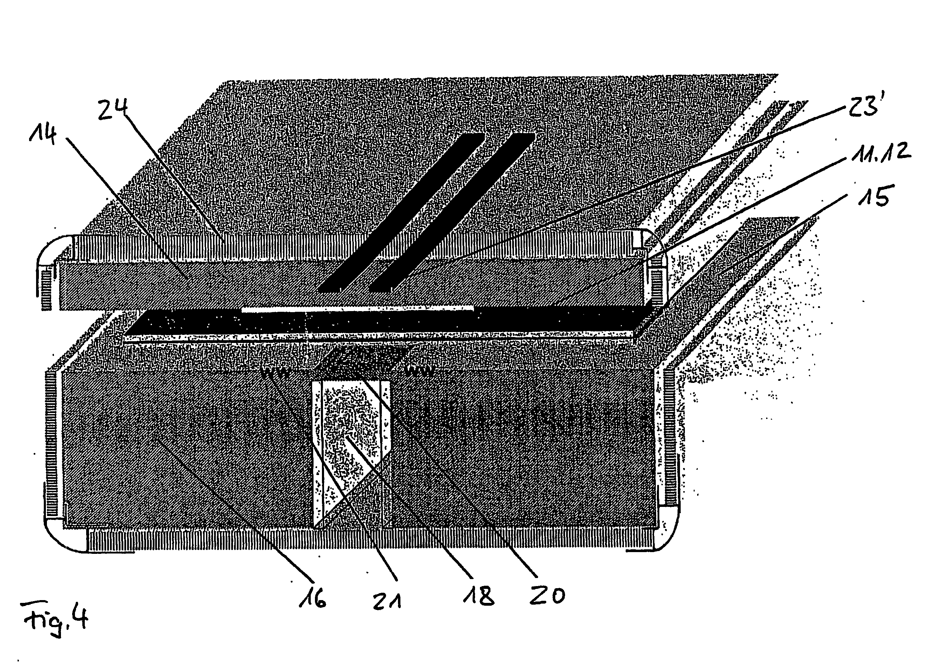

Fig. 4 zeigt eine gegenüber der Fig. 3 leicht abgewandelte Vorrichtung, wobei nicht sämtliche Teile dargestellt sind. Es sind aber dieselben Bezugszeichen wie in Fig. 3 verwandt. Der einzige Unterschied besteht darin, dass anstelle des Permanentmagneten 19 bei der Ausführungsform nach Fig. 3 Elektromagneten 23' verwandt sind, die vorzugsweise zeitgleich mit Mikrowellenenergiequelle 19 aktiviert bzw. deaktiviert werden.

## Patentansprüche

1. Verfahren zum Verbinden von Formteilen, von denen wenigstens eines aus nicht metallischem Material besteht, mit wenigstens einer Klebstoffnaht aus einem durch Wärmebeaufschlagung aushärtbaren Klebstoff, wobei die Formteile jeweils wenigstens bereichsweise in eine Metallform, von denen wenigstens eine entlang der Klebstoffnaht mit einer Nut versehen ist, eingelegt werden und die Klebstoffnaht aufgebracht wird, anschließend die Metallformen und die Formteile zusammengedrückt werden und die Klebstoffnaht erwärmt wird,
**dadurch gekennzeichnet,**
**dass** in die Nut der einen Metallform eine Mikrowellenleitung eingelegt wird und nach dem Zusammendrücken der Metallformen und der Formteile über die Mikrowellenleitung Mikrowellen in die Nut zur Erwärmung der Mikrowellen absorbierenden Klebstoffnaht eingeleitet werden.

2. Verfahren nach Anspruch 1,
**dadurch gekennzeichnet,**
**dass** als Mikrowellenleitung ein Hohlleiter verwendet wird.

3. Verfahren nach Anspruch 2,
**dadurch gekennzeichnet,**
**dass** die Formteile von der jeweiligen an einem Handhabungsgerät angeordneten Metallform gegriffen, wenigstens ein Formteil an einer Klebstoffabgabe entlanggeführt und anschließend die beiden Metallformen mit den Formteilen zusammengedrückt werden.

4. Verfahren nach Anspruch 1,
**dadurch gekennzeichnet,**
**dass** als Mikrowellenleitung ein Koaxialleiter verwendet wird, der von einem draht- oder rohrförmigen isolierten Innenleiter, der in die Nut eingelegt wird, und dem Nutrandbereich der Metallform gebildet wird.

5. Verfahren nach Anspruch 4,
**dadurch gekennzeichnet,**
**dass** als Metallform Pressformteile einer Metallpressform verwendet werden.

6. Verfahren nach Anspruch 4 oder 5,
**dadurch gekennzeichnet,**
**dass** als Außenleiter des Koaxialleiters zusätzlich ein Metall enthaltendes Formteil verwendet wird, welches gegenüber dem anderen aus nicht metallischem Material bestehenden Formteil auf der den Innenleiter aufnehmenden Nut abgewandten Seite zwischen den Metallformen angeordnet wird.

7. Verfahren nach einem der Ansprüche 4-6,
**dadurch gekennzeichnet,**
**dass** durch den rohrförmigen Innenleiter und/oder die Nut ein Fluid eingeleitet wird.

8. Verfahren nach einem der Ansprüche 1-7,
**dadurch gekennzeichnet,**
**dass** über der Länge der Nut mehrere Mikrowellenleiterabschnitte eingelegt werden, die getrennt mit Mikrowellenenergie versorgt werden.

9. Verfahren nach einen der Ansprüche 1-8,
**dadurch gekennzeichnet,**
**dass** zusätzlich an die Klebstoffnaht während des Zusammendrückens der Metallformen ein Gleichstrommagnetfeld angelegt wird.

10. Verfahren nach Anspruch 9,
**dadurch gekennzeichnet,**
**dass** in die nicht die Mikrowellenleitung aufnehmende Nut Permanentmagneten eingelegt werden.

11. Verfahren nach einem der Ansprüche 1-10,
**dadurch gekennzeichnet,**
**dass** die Mikrowellen absorbierende Klehstoffnaht mikrowellenabsorbierende Füllstoffe, insbesondere Ruß, Ferrite, Metallpartikel, Metallgitter und/oder dielektrisch absorbierende Salze, vorzugsweise Bariumtitanat, enthält.

12. Verfahren nach Anspruch 11,
**dadurch gekennzeichnet,**
**dass** die Ferrite ausgewählt sind aus der Gruppe, die gebildet wird von Ferriten der allgemeinen Formel
Me^{a}₁₋ₓMe^{b}ₓFe₂O₄ oder Li₁₋ₓZn₂ₓFe₅₋ₓO₈, wobei
Me^{a=}Mn, Co, Ni, Mg, Ca, Cu, Zn, Y, V und/oder Co ist;
Me^{b}=Zn und/oder Cd ist, und
X=0-1, insbesondere 0,05-0,95 ist.

13. Vorrichtung zum Verbinden von Formteilen mit einer Klebstoffnaht aus einem durch Wärmebeaufschlagung aushärtbaren Klebstoff, wobei wenigstens ein Formteil aus nicht metallischem Material besteht, mit zwei Metallformen, in welche das jeweilige Formteil wenigstens bereichsweise einlegbar ist, wobei wenigstens eine Metallform entlang der Klebstoffnaht mit einer Nut versehen ist,
**dadurch gekennzeichnet,**
**dass** in der Nut (6,17) der einen Metallform (4,15) eine Mikrowellenleitung (8,18) angeordnet ist, welche mit einer Mikrowellenenergiequelle verbunden ist.

14. Vorrichtung nach Anspruch 13,
**dadurch gekennzeichnet,**
**dass** die Mikrowellenleitung als Hohlleiter (18) ausgebildet ist.

15. Vorrichtung nach Anspruch 14,
**dadurch gekennzeichnet,**
**dass** die Metallformen (14,15) jeweils an einem Handhabungsgerät angeordnet sind.

16. Vorrichtung nach Anspruch 13,
**dadurch gekennzeichnet,**
**dass** die Mikrowellenleitung als Koaxialleitung ausgebildet ist, welche von einem draht- oder rohrförmigen isolierten Innenleiter (8) innerhalb der Nut (6) und dem Nutrandbereich gebildet ist, welcher als Außenleiter mit der Mikrowellenenergiequelle verbunden ist.

17. Vorrichtung nach Anspruch 16,
**dadurch gekennzeichnet,**
**dass** die Metallformen als Pressformteile (4,5) einer Metallpressform ausgebildet sind.

18. Vorrichtung nach Anspruch 16 oder 17,
**dadurch gekennzeichnet,**
**dass** die Mikrowellenenergiequelle zusätzlich mit einem Metall enthaltenen Formteil (1) verbunden ist, welches auf der der den Innenleiter (8) aufnehmenden Nut (6) abgewandten Seite zwischen den Metallformen angeordnet ist und gemeinsam mit dem Innenleiter (8) den Mikrowellenkoaxialleiter bildet.

19. Vorrichtung nach einem der Anspruche 16-18,
**dadurch gekennzeichnet,**
**dass** die Verbindung zwischen der Mikrowellenenergiequelle und dem Koaxialleiter innerhalb der Pressform (4,5) über wenigstens einen im Bereich der den Innenleiter (8) aufnehmenden Nut (6) angeordneten Anschlussflansch erfolgt.

## Claims

1. Method of connecting moulded parts, of which at least one consists of a non-metallic material, with at least one adhesive seam consisting of an adhesive curable by the action of heat, wherein the moulded parts are each laid at least in regions in a metal mould, of which at least one is provided along the adhesive seam with a groove, and the adhesive seam is applied, subsequently the metal moulds and the moulded parts are pressed together and the adhesive seam is heated, **characterised in that** a microwave conductor is inserted into the groove of the one metal mould and after pressing together of the metal moulds and the moulded parts microwaves are introduced into the groove by way of the microwave conductor for heating the adhesive seam absorbing microwaves.

2. Method according to claim 1, **characterised in that** a cavity waveguide is used as microwave conductor.

3. Method according to claim 2, **characterised in that** the moulded parts are gripped by the respective metal mould arranged at a handling apparatus, at least one moulded part is guided along an adhesive delivery means and subsequently the two metal moulds together with the moulded parts are pressed together.

4. Method according to claim 1, **characterised in that** a coaxial conductor is used as microwave conductor, which is formed by a wire-shaped or tubular insulated inner conductor, which is laid in the groove, and the groove edge region of the metal mould.

5. Method according to claim 4, **characterised in that** press-moulded parts of a metal press mould are used as metal mould.

6. Method according to claim 4 or 5, **characterised in that** as outer conductor of the coaxial conductor there is additionally used a moulded part which contains metal and which relative to the other moulded part consisting of non-metallic material is arranged on the side, which is remote from the groove receiving the inner conductor, between the metal moulds.

7. Method according to one of claims 4 to 6, **characterised in that** a fluid is introduced through the tubular inner conductor and/or the groove.

8. Method according to one of claims 1 to 7, **characterised in that** several microwave conductor sections separately supplied with microwave energy are inserted over the length of the groove.

9. Method according to one of claims 1 to 8, **characterised in that** a direct current magnetic field is additionally applied to the adhesive seam during pressing together of the metal moulds.

10. Method according to claim 9, **characterised in that** permanent magnets are laid in the groove not receiving the microwave conductor.

11. Method according to one of claims 1 to 10, **characterised in that** the adhesive seam absorbing microwaves contains filters, particularly carbon black, ferrite, metal particles, metal meshes and/or dielectric absorbent salts, preferably barium titanate.

12. Method according to claim 11, **characterised in** the ferrite is selected from the group formed by ferrites as a general formula Me^{a} ₁₋ₓMe^{b} ₓFe₂O₄ or Li₁₋ₓZn₂ₓFe₅₋ₓO₈, wherein Me^{a} is Mn, Co, Ni, Mg, Ca, Cu, Zn, Y, V and/or Co, Me^{b} is Zn and/or Cd and X is 0 to 1, particularly 0.05 to 0.95.

13. Device for connecting moulded parts by an adhesive seam consisting of an adhesive curable by the action of heat, wherein at least one moulded part consists of non-metallic material, with two metal moulds into which the respective moulded part can be laid at least in regions, wherein at least one metal mould is provided along the adhesive seam of the groove, **characterised in that** a microwave conductor (8, 18) connected with a microwave energy source is arranged in the groove (6, 17) of the one metal mould (4, 15).

14. Device according to claim 13, **characterised in that** the microwave conductor is constructed as a cavity waveguide (18).

15. Device according to claim 14, **characterised in that** the metal moulds (14, 15) are each arranged at a respective handling apparatus.

16. Device according to claim 13, **characterised in that** the microwave conductor is constructed as a coaxial conductor, which is formed by a wire-shaped or tubular insulated inner conductor (8) within the groove (6) and the groove edge region, which is connected as an outer conductor with the microwave energy source.

17. Device according to claim 16, **characterised in that** the metal moulds are constructed as press-moulded parts (4, 5) of a metal press mould.

18. Device according to claim 16 or 17, **characterised in that** the microwave energy source is additionally connected with a moulded part (1) containing a metal, which is arranged on the side, which is remote from the groove (6) receiving the inner conductor (8), between the metal moulds and forms together with the inner conductor (8) the microwave coaxial conductor.

19. Device according to one of claims 16 to 18, **characterised in that** the connection between the microwave energy source and the coaxial conductor takes place within the press mould (4, 5) by way of at least one connecting flange arranged in the region of the groove (6) receiving the inner conductor (8).

## Revendications

1. Procédé d'assemblage de préformés, dont au moins un est constitué d'un matériau non métallique, par au moins un joint de colle en colle thermodurcissable, les préformés étant respectivement insérés au moins par zone dans un moule métallique, dont au moins un est pourvu d'une rainure le long du joint de colle, et le joint de colle étant appliqué, les moules métalliques et les préformés étant ensuite compressés et le joint de colle chauffé,
**caractérisé en ce que**
un guide de micro-ondes est inséré dans la rainure d'un des moules métalliques et **en ce qu'**après la compression des moules métalliques et des préformés des micro-ondes sont introduites dans la rainure via le guide de micro-ondes pour chauffer le joint de colle absorbant les micro-ondes.

2. Procédé selon la revendication 1, **caractérisé en ce que** un guide d'ondes est utilisé comme guide de micro-ondes.

3. Procédé selon la revendication 2, **caractérisé en ce que** les préformés sont pris dans le moule métallique correspondant disposé sur un manipulateur et **en ce qu'**au moins un préformé est guidé le long d'un distributeur de colle et qu'ensuite les deux moules métalliques sont compressés avec les préformés.

4. Procédé selon la revendication 1, **caractérisé en ce qu'**un guide coaxial est utilisé comme guide de micro-ondes, lequel est formé par un conducteur intérieur isolé en forme de fil ou de tube, qui est inséré dans la rainure, et par la zone de bordure de la rainure du moule métallique.

5. Procédé selon la revendication 4, **caractérisé en ce que** des pièces de moule à pression d'un moule à pression métallique sont utilisés comme moule métallique.

6. Procédé selon la revendication 4 ou 5, **caractérisé en ce que**, en outre, un préformé contenant du métal est utilisé comme conducteur extérieur du guide coaxial, lequel est disposé sur la face opposée à la rainure recevant le conducteur intérieur entre les moules métalliques par rapport à l'autre préformé constitué d'un matériau non métallique.

7. Procédé selon l'une des revendications 4-6 **caractérisé en ce qu'**un fluide est introduit à l'intérieur du conducteur intérieur en forme de tube et/ou de la rainure.

8. Procédé selon l'une des revendications 1-7, **caractérisé en ce que** plusieurs sections de guides de micro-ondes sont insérées sur la longueur de la rainure, lesquelles sont alimentées séparément en énergie à micro-ondes.

9. Procédé selon l'une des revendications 1-8, **caractérisé en ce que**, en outre, un champ magnétique à courant continu est appliqué sur le joint de colle pendant la compression des moules métalliques.

10. Procédé selon la revendication 9, **caractérisé en ce que** des aimants permanents sont insérés dans la rainure ne recevant pas le guide de micro-ondes.

11. Procédé selon l'une des revendications 1-10, **caractérisé en ce que** le joint de colle absorbant les micro-ondes contient des charges absorbant les micro-ondes, en particulier du noir de carbone, des ferrites, des particules métalliques, des réseaux métalliques et/ou des sels à absorption diélectrique, de préférence du titanate de baryum.

12. Procédé selon la revendication 11, **caractérisé en ce que** les ferrites sont choisies dans le groupe formé de ferrites de formule générale
Me^{a} ₁₋ₓMe^{b} ₓFe₂O₄ ou Li₁₋ₓZn₂ₓFes₅₋ₓO₈,
Me^{a}= étant Mn, Co, Ni, Mg, Ca, Cu, Zn, Y, V et/ou Co ;
Me^{b}=Zn et/ou Cd et
X=0-1, en particulier 0,05-0,95.

13. Dispositif d'assemblage de préformés par un joint de colle en colle thermodurcissable, au moins un préformé étant constitué d'un matériau non métallique, comportant deux moules métalliques, dans lesquels le préformé respectif peut être insérée au moins par zone, au moins un moule métallique étant pourvu d'une rainure le long du joint de colle, **caractérisé en ce qu'**un guide de micro-ondes (8, 18) est disposé dans la rainure (6, 17) de l'un des moules métalliques (4, 15), lequel est relié à une source d'énergie à micro-ondes.

14. Dispositif selon la revendication 13, **caractérisé en ce que** le guide de micro-ondes est conçu comme guide d'ondes (18).

15. Dispositif selon la revendication 14, **caractérisé en ce que** les moules métalliques (14, 15) sont disposé respectivement sur un manipulateur.

16. Dispositif selon la revendication 13, **caractérisé en ce que** le guide de micro-ondes est conçu comme guide coaxial, lequel est formé par un conducteur intérieur isolé (8) en forme de fil ou de tube à l'intérieur de la rainure (6) et par la zone de bordure de la rainure, laquelle zone est relié comme conducteur extérieur à la source d'énergie à micro-ondes.

17. Dispositif selon la revendication 16, **caractérisé en ce que** les moules métalliques sont conçus comme pièces de moule à pression (4, 5) d'un moule à pression métallique.

18. Dispositif selon la revendication 16 ou 17, **caractérisé en ce que** la source d'énergie à micro-ondes est reliée en plus à un préformé (1) contenant du métal, qui est disposée entre les moules métalliques sur la face opposée de la rainure (6) recevant le conducteur intérieur (8) et forme le guide de micro-ondes coaxial conjointement avec le conducteur intérieur (8).

19. Dispositif selon l'une des revendications 16-18, **caractérisé en ce que** la liaison entre la source d'énergie à micro-ondes et le guide coaxial à l'intérieur du moule à pression (4, 5) s'effectue par l'intermédiaire d'au moins une bride de raccordement disposée dans la zone de la rainure (6) recevant le conducteur intérieur (8).
